# EUROPÄISCHE PATENTSCHRIFT

(11) **EP 3 498 580 B1**
(45) Veröffentlichungstag und Bekanntmachung des Hinweises auf die Patenterteilung: **22.07.2020**
(21) Anmeldenummer: 18207775.0
(22) Anmeldetag: 22.11.2018
(51) Int. Cl.: B62K 21/00, B62J 27/00

(54) **VERFAHREN UND VORRICHTUNG ZUR EINSTELLUNG EINER VORGEGEBENEN ÜBERSETZUNG ZWISCHEN LENKERWINKEL UND EINSCHLAGWINKEL EINES FAHRRADVORDERRADS**
METHOD AND DEVICE FOR ADJUSTING A PREDETERMINED RATIO BETWEEN HANDLEBAR ANGLE AND STEERING ANGLE OF A FRONT WHEEL OF A BICYCLE
PROCÉDÉ ET DISPOSITIF DE RÉGLAGE D'UN RAPPORT DE TRANSMISSION PRÉDÉFINI ENTRE L'ANGLE DE GUIDON ET L'ANGLE DE BRAQUAGE D'UNE ROUE AVANT DE BICYCLETTE

(30) Priorität: 13.12.2017 DE 102017222560
(43) Veröffentlichungstag der Anmeldung: 19.06.2019
(73) Patentinhaber: Robert Bosch GmbH, 70442 Stuttgart (DE)
(72) Erfinder: Dackermann, Tim, 72072 Tuebingen (DE); Dauer, Felix, 72072 Tuebingen (DE)

(56) Entgegenhaltungen:
- WO-A2-2011/032544
- DE-A1-102005 018 484
- DE-A1-102012 222 048
- DE-A1-102013 214 517

## Beschreibung

### Stand der Technik

Die Erfindung betrifft ein Verfahren und eine Vorrichtung zur Einstellung einer vorgegebenen Übersetzung zwischen Lenkerwinkel und Einschlagwinkel eines Fahrradvorderrads.

Aus dem Dokument DE 10 2008 043 049 A1 ist bereits bekannt, den Einschlagwinkel eines gelenkten Rads eines Fahrrads in Abhängigkeit der erfassten Geschwindigkeit des Fahrrads einzustellen. Dies hat einen Sicherheitsaspekt, da zum Beispiel ein großer Lenkerwinkel bei hohen Geschwindigkeiten schnell zu einem Überlenken und einem daraus folgenden Unfall führen kann.

Das gattungsgemäße Dokument DE 10 2012 222 048 A1 beschreibt eine Vorrichtung mit einer Recheneinheit, welche dazu ausgebildet ist, ein Abheben eines Hinterrads eines Fahrrads zu erkennen.

Aufgabe der Erfindung ist es, ein Verfahren und eine Vorrichtung zu entwickeln, welche eine weitere sicherheitskritische Fahrsituation bei der Einstellung einer vorgegebenen Übersetzung zwischen Lenkerwinkel und Einschlagwinkel eines Fahrradvorderrads berücksichtigen.

### Offenbarung der Erfindung

Zur Lösung der Aufgabe wird ein Verfahren gemäß Anspruch 1 vorgeschlagen. Zudem werden eine Vorrichtung gemäß Anspruch 9, welche zur Ausführung des erfindungsgemäßen Verfahrens ausgebildet ist und ein Fahrrad gemäß Anspruch 15, insbesondere ein elektrisch betriebenes Fahrrad mit der Vorrichtung vorgeschlagen.

Bei dem Verfahren wird zunächst ein Abheben eines Hinterrads des Fahrrads erkannt. Solch ein Abheben des Hinterrads kann beispielsweise auf eine starke Bremsung am Vorderrad hindeuten. Wird während des Abhebens des Hinterrads ein zu großer Einschlagwinkel am gelenkten Vorderrad durch eine Drehung des Lenkers erzeugt, so kann es beispielsweise dazu kommen, dass der Fahrradfahrer nach vorne über das Fahrrad fällt. Ein Abheben des Hinterrads kann auch auf das Abheben des Fahrrads insgesamt hindeuten. Wird beim anschließenden Aufkommen des Fahrrads ein zu großer Einschlagwinkel am gelenkten Vorderrad durch eine Drehung des Lenkers erzeugt, so kann der Fahrer auch hier über das Fahrrad nach vorne fallen. Ebenfalls birgt das Abheben des Hinterrads ein großes Sicherheitsrisiko während einer Kurvenfahrt, da das Fahrrad bei zu großem Einschlagwinkel des Vorderrads droht seitlich wegzukippen. Erfindungsgemäß wird in einem folgenden Verfahrensschritt in Abhängigkeit des erkannten Abhebens des Hinterrads eine vorgegebene Übersetzung zwischen Lenkerwinkel und Einschlagwinkel des gelenkten Vorderrads mittels eines an einer Lenkstange des Fahrrads angeordneten Aktuators eingestellt. Vorzugsweise wird beim Erkennen des Abhebens des Hinterrads die vorgegebene Übersetzung zwischen Lenkerwinkel und Einschlagwinkel des Vorderrads auf einen Wert kleiner 1 eingestellt. Das bedeutet, dass bei einem bestimmten Lenkerwinkel ein kleinerer Einschlagwinkel des Vorderrads im Vergleich zum üblichen Einschlagwinkel beim Abheben des Hinterrads erzeugt wird. Somit kann beispielsweise verhindert werden, dass der Fahrradfahrer aufgrund seiner Trägheit und der plötzlichen Richtungsänderung über das Fahrrad nach vorne wegfällt. Auch kann in Kurvenfahrten somit verhindert werden, dass beim Abheben des Hinterrads eine große Drehung des Vorderrads erzeugt wird und somit das Fahrrad seitlich wegkippt.

Bevorzugt wird zusätzlich eine Geschwindigkeit des Fahrrads erfasst. Hierzu kann beispielsweise eine Drehzahl des Vorderrads erfasst werden. In einem folgenden Verfahrensschritt wird die vorgegebene Übersetzung zwischen Lenkerwinkel und Einschlagwinkel des Vorderrads zusätzlich in Abhängigkeit der erfassten Geschwindigkeit eingestellt. Ein Abheben des Hinterrads, welches bei relativ hoher Geschwindigkeit erzeugt wird, birgt ein noch größeres Sicherheitsrisiko, da beispielsweise die auftretenden Querkräfte hierbei noch größer sind.

Vorzugsweise wird die vorgegebene Übersetzung zwischen Lenkerwinkel und Einschlagwinkel des Vorderrads bei Vergrößerung des Lenkerwinkels linear verändert. Besonders die lineare Verringerung der Übersetzung bei Vergrößerung des Lenkerwinkels würde den Vorteil erbringen, dass größeren Lenkerwinkeln kleinere, vorgegebene Übersetzungen zugeordnet wären und somit der Einschlagswinkel des Vorderrads hierbei linear kleiner werden würde. Alternativ wird die vorgegebene Übersetzung zwischen Lenkerwinkel und Einschlagwinkel des Vorderrads bei Vergrößerung des Lenkerwinkels nichtlinear verändert. Beispielsweise könnte die vorgegebene Übersetzung gegenüber dem Lenkerwinkel progressiv verringert werden. Kleineren Lenkerwinkeln, welche annährend einer Geradeausfahrt entsprechen, wären also kaum veränderte Übersetzungen zugeordnet, während größeren Lenkerwinkel stark verringerte Übersetzungen zugeordnet wären. Große Lenkerwinkel, die ein besonders großes Sicherheitsrisiko beim Abheben des Hinterrads ergeben, würden somit besonders stark gedämpft werden.

Bevorzugt ist die vorgegebene Übersetzung abhängig von einem Fahrerwunsch veränderbar. Die vorgegebene Übersetzung kann somit an einen bestimmten Typ von Fahrer angepasst werden. Entsprechende Übersetzungsprofile für jeden Typ Fahrer können hinterlegt werden und somit eine individuelle Anpassung an den Fahrradfahrer auf Wunsch ermöglicht werden.

Vorzugsweise wird in einem weiteren Verfahrensschritt eine erste Drehrate des Hinterrads erfasst und in Abhängigkeit dieser erfassten ersten Drehrate ein Abheben des Hinterrads des Fahrrads erkannt. Wird beispielsweise die erste Drehrate am Schwerpunkt des Rades erfasst und überschreitet die erfasste erste Drehrate am Schwerpunkt des Rades einen Schwellenwert, kann ein Abheben des Hinterrads erkannt werden. Vorzugsweise wird in einem weiteren Verfahrensschritt eine zweite Drehrate des Vorderrads des Fahrrads erfasst. Darauf folgt ein Vergleich der erfassten Vorderraddrehrate mit der erfassten Hinterraddrehrate. Die Ermittlung des Abhebens des Hinterrads des Fahrrads erfolgt dann in Abhängigkeit von diesem durchgeführten Vergleich. Dies ermöglicht ein sehr genaues Erkennen des Abhebens des Hinterrads, da die Räder hierbei mit unterschiedlichen Geschwindigkeiten rotieren.

Vorzugsweise wird die Beschleunigung des Fahrrads in z-Richtung, das heißt nach oben, insbesondere am Schwerpunkt des Fahrrads, erfasst. Eine derartige Beschleunigung in z-Richtung des Hinterrades im Vergleich zum Vorderrad impliziert ebenfalls, dass das Hinterrad vom Boden abhebt.

Die Erfindung weist zusätzlich eine Vorrichtung auf, welche zur Ausführung des zuvor beschriebenen erfindungsgemäßen Verfahrens ausgebildet ist. Hierbei weist die Vorrichtung eine Recheneinheit auf, welche dazu ausgebildet ist, ein Abheben eines Hinterrads zu erkennen. Außerdem weist die Vorrichtung einen an einer Lenkstange des Fahrrads angeordneten Aktuator auf. Die Recheneinheit ist in diesem Zusammenhang dazu ausgebildet, in Abhängigkeit des erkannten Abhebens des Hinterrads eine vorgegebene Übersetzung zwischen Lenkerwinkel und Einschlagwinkel des Vorderrads zu ermitteln und außerdem die vorgegebene Übersetzung dem Aktuator zu übermitteln. Der an der Lenkstange angeordnete Aktuator wiederum ist dazu ausgebildet, die ermittelte, vorgegebene Übersetzung an der Lenkstange einzustellen.

Vorzugsweise weist die Vorrichtung zusätzlich einen ersten Sensor auf, welcher dazu ausgebildet ist, eine erste Drehrate des Hinterrads des Fahrrads zu erfassen. Bei dem Sensor kann es sich beispielsweise um einen Drehratensensor handeln. In diesem Zusammenhang ist die Recheneinheit vorzugsweise dazu ausgebildet, ein Abheben des Hinterrads des Fahrrads in Abhängigkeit dieser erfassten ersten Drehrate zu ermitteln. Zusätzlich weist die Vorrichtung vorzugsweise einen zweiten Sensor auf, welcher dazu ausgebildet ist, eine zweite Drehrate des Vorderrads zu erfassen. Es kann sich hierbei beispielsweise ebenfalls um einen Drehratensensor handeln. Die Recheneinheit ist in diesem Zusammenhang dazu ausgebildet, die erfasste erste Drehrate mit der erfassten zweiten Drehrate zu vergleichen ein Abheben des Hinterrads abhängig von diesem durchgeführten Vergleich zu erkennen.

Vorzugsweise weist die Vorrichtung zusätzlich einen dritten Sensor auf, welcher dazu ausgebildet ist, den momentanen, mittels des Fahrradlenkers erzeugten Lenkerwinkel zu erfassen. Bei dem dritten Sensor kann es sich beispielsweise um einen Lenkerwinkelsensor handeln. Die Recheneinheit ist in diesem Zusammenhang dazu ausgebildet, die vorgegebene Übersetzung zwischen Lenkerwinkel und Einschlagwinkel des Vorderrads bei erfasster Vergrößerung des Lenkerwinkels zu verändern. Bei der Veränderung der Übersetzung kann es sich beispielsweise um eine lineare oder nichtlineare Veränderung bei Vergrößerung des Lenkerwinkels handeln.

Bevorzugt weist die Vorrichtung zusätzlich einen vierten Sensor auf, welcher dazu ausgebildet ist, eine Geschwindigkeit des Fahrrads zu erfassen. Es kann sich hierbei beispielsweise um einen Drehzahlsensor handeln, welcher am Vorderrad des Fahrrads angeordnet ist. Die Recheneinheit ist in diesem Zusammenhang dazu ausgebildet, die vorgegebene Übersetzung zusätzlich in Abhängigkeit der erfassten Geschwindigkeit zu erfassen. Vorzugsweise weist die Vorrichtung zusätzlich einen fünften Sensor auf, welcher dazu ausgebildet ist, die Beschleunigung des Fahrrads in z-Richtung, das heißt nach oben, zu erfassen. Dieser fünfte Sensor kann beispielsweise am Schwerpunkt des Fahrrads angeordnet sein. Alternativ kann dieser fünfte Sensor auch am Hinterrad des Fahrrads angeordnet sein. In diesem Zusammenhang könnte auch noch ein sechster Sensor vorgesehen sein, welcher am Vorderrad angeordnet ist.

Vorzugsweise ist der Aktuator als ein CVT (Continuously Variable Transmission)-Getriebe ausgebildet. Dieses CVT-Getriebe ist wiederum dazu ausgebildet, die vorgegebene Übersetzung zwischen zwei zueinander verschiebbaren Komponenten der Lenkstange stufenlos einzustellen. Die Lenkstange kann hierzu in einem Bereich aus beispielsweise zwei parallel zueinander gelagerten Kegelscheiben ausgebildet sein, deren Position zueinander verändert werden kann. Je nach Position der Kegelscheiben relativ zueinander und der sich somit ergebenden Position der Kette auf den Kegelscheiben, rotieren die Kegelkörper mit unterschiedlicher Drehzahl und ermöglichen somit ein stufenloses Einstellen der vorgegebenen Übersetzung. Es ist somit anders als bei dem steer-by-wire-Prinzip weiterhin eine mechanische Kopplung zwischen Lenker und Lenkbewegung vorhanden.

Bevorzugt weist die Vorrichtung zusätzlich eine Signalerzeugungseinheit auf, welche dazu ausgebildet ist, ein Signal des Fahrradfahrers zu erzeugen. Das Signal repräsentiert hierbei beispielsweise einen Wunsch des Fahrers auf eine bestimmte, vorgegebene Übersetzung zwischen Lenkerwinkel und Einschlagwinkel. Die Signalerzeugungseinheit kann beispielsweise als eine Taste ausgebildet sein, mittels welcher der Fahrer das vorgegebene Übersetzungsverhältnis vergrößern oder verkleinern kann.

Die Erfindung weist außerdem ein Fahrrad mit der zuvor beschriebenen, erfindungsgemäßen Vorrichtung auf. Bei dem Fahrrad kann es sich beispielsweise um ein elektrisch betriebenes Fahrrad oder ein S-Pedelec handeln.

### Beschreibung der Zeichnungen

Figur 1 zeigt eine Ausführungsform des erfindungsgemäßen Verfahrens zur Einstellung einer vorgegebenen Übersetzung zwischen Lenkerwinkel und Einschlagwinkel eines Vorderrads eines Fahrrads.
Figur 2 zeigt schematisch eine Ausführungsform der erfindungsgemäßen Vorrichtung.
Figur 3 zeigt in der Draufsicht beispielhaft eine vorgegebene Übersetzung mit einem Wert kleiner 1.
Figur 4 zeigt schematisch beispielhaft ein Fahrrad mit einer erfindungsgemäßen Vorrichtung.

### Ausführungsbeispiele

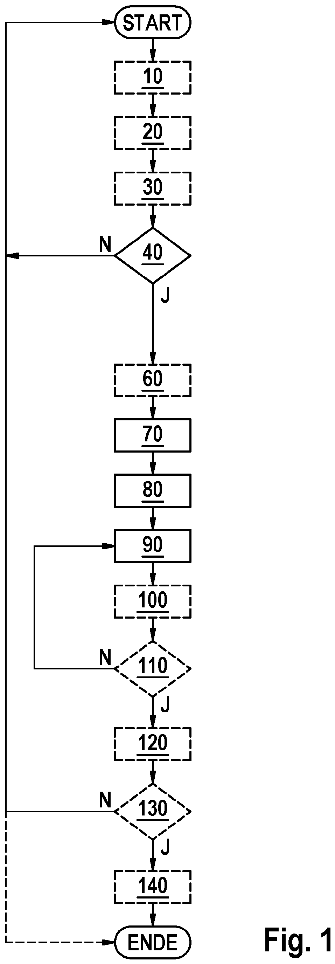

Figur 1 zeigt in Form eines Ablaufdiagramms eine Ausführungsform eines Verfahrens zur Einstellung einer vorgegebenen Übersetzung zwischen Lenkerwinkel und Einschlagwinkel eines gelenkten Vorderrads eines Fahrrads.

Hierbei wird in einem ersten Verfahrensschritt 40 überprüft, ob ein Abheben eines Hinterrads eines Fahrrads momentan vorliegt. Befindet sich das Hinterrad momentan noch am Boden, so wird das Verfahren von vorne gestartet oder alternativ beendet. Befindet das Hinterrad momentan in der Luft, so wird in Verfahrensschritt 70 eine vorgegebene Übersetzung zwischen Lenkerwinkel und Einschlagwinkel eines Vorderrads des Fahrrads mittels einer Recheneinheit ermittelt. Daraufhin wird in Verfahrensschritt 80 die ermittelte, vorgegebene Übersetzung an einen an einer Lenkstange angeordneten Aktuator übermittelt. In einem darauffolgenden Verfahrensschritt 90 wird die ermittelte, vorgegebene Übersetzung mittels des Aktuators eingestellt. Daraufhin wird das Verfahren beendet.

Optional wird in Verfahrensschritt 70 die vorgegebene Übersetzung zwischen Lenkerwinkel und Einschlagwinkel mit einem Wert kleiner 1 ermittelt. Dieser ermittelte Wert kleiner 1 wird dann in Verfahrensschritt 90 mittels des Aktuators eingestellt.

Optional kann in einem Verfahrensschritt 10 zunächst eine erste Drehrate des Hinterrads mittels eines ersten Sensors erfasst. Zusätzlich wird optional in einem folgenden Verfahrensschritt 20 eine zweite Drehrate des Vorderrads mittels eines zweiten Sensors erfasst. Diese erfasste erste und zweite Drehrate werden in Verfahrensschritt 40 miteinander verglichen und bei der Entscheidung, ob ein Abheben des Hinterrads vorliegt oder nicht, mit berücksichtigt. So deutet beispielsweise eine im Vergleich höhere zweite Drehrate auf ein Durchdrehen des Hinterrads in der Luft hin.

Optional wird in einem Verfahrensschritt 30 die Beschleunigung des Fahrrads in z-Richtung, das heißt nach oben erfasst und bei der Entscheidung in Verfahrensschritt 40, ob ein Abheben des Hinterrads vorliegt oder nicht, mit berücksichtigt. Eine derartige Beschleunigung in z-Richtung, beispielsweise am Schwerpunkt des Fahrrads, impliziert ebenfalls, dass das Hinterrad vom Boden abhebt.

Optional wird in einem auf den Verfahrensschritt 40 folgenden Verfahrensschritt 60 eine Geschwindigkeit des Fahrrads mittels eines vierten Sensors erfasst. Bei der folgenden Ermittlung der vorgegebenen Übersetzung in Verfahrensschritt 70 kann die Geschwindigkeit dann mit berücksichtigt werden.

Optional kann in einem auf den Verfahrensschritt 90 folgenden Verfahrensschritt 100 der momentane Lenkerwinkel mittels eines dritten Sensors erfasst werden. In dem Folgenden optionalen Verfahrensschritt 110 wird anschließend geprüft, ob eine Vergrößerung des Lenkerwinkels im Vergleich zum vorherigen Lenkerwinkel vorliegt. Liegt keine Vergrößerung vor, sondern der Lenkerwinkel ist aktuell gleichbleibend, so bleibt die vorgegebene, mittels des Aktuators eingestellte Übersetzung gleich. Wird allerdings eine Vergrößerung des Lenkerwinkels festgestellt, so kann in dem folgenden, optionalen Verfahrensschritt 120 die vorgegebene Übersetzung linear verändert werden. Beispielsweise kann die vorgegebene Übersetzung bei Vergrößerung des Lenkerwinkels linear verringert werden. Alternativ kann die vorgegebene Übersetzung auch nichtlinear verändert werden.

Optional wird in einem auf den Verfahrensschritt 120 folgenden Verfahrensschritt 130 geprüft, ob ein Signal erfasst wird, welches auf eine von dem Fahrer gewünschte Änderung der eingestellten, vorgegebenen Übersetzung hindeutet. Wird hierbei kein Signal erfasst, so wird das Verfahren von vorne gestartet oder alternativ beendet. Wird ein solcher Fahrerwunsch erfasst, so wird in dem Folgenden optionalen Verfahrensschritt 140 die vorgegebene Übersetzung entsprechend des Fahrerwunsches angepasst.

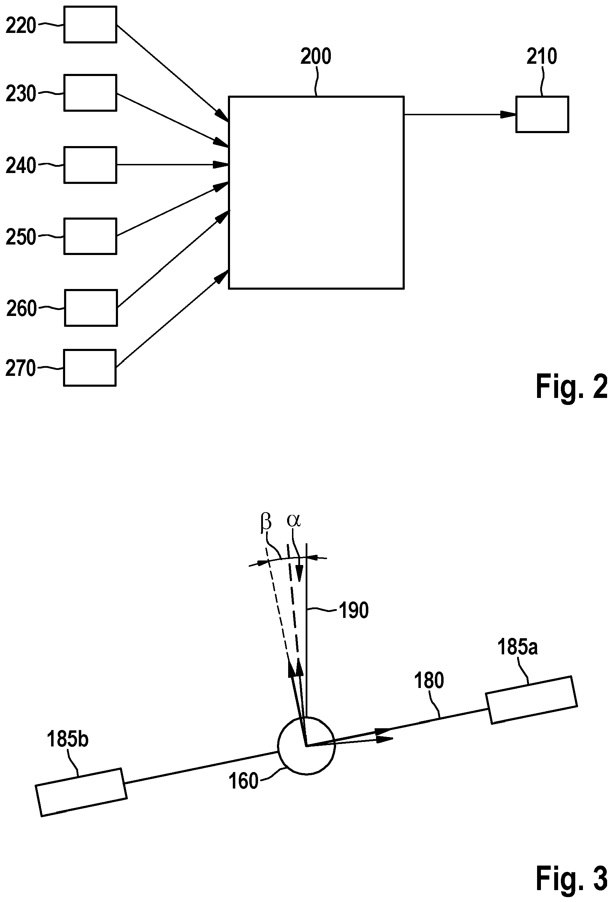

Figur 2 zeigt schematisch eine erste Ausführungsform einer Vorrichtung zur Ausführung des in Figur 1 gezeigten Verfahrens. Die Vorrichtung weist hierbei eine Recheneinheit 200 auf, welche dazu ausgebildet ist, ein Abheben eines Hinterrads des Fahrrads zu erkennen und abhängig von dem erkannten Abheben eine vorgegebene Übersetzung zwischen Lenkerwinkel und Einschlagwinkel des Fahrradvorderrads zu ermitteln. Außerdem weist die Vorrichtung einen an einer Lenkstange des Fahrrads angeordneten Aktuator 210 auf. Die Recheneinheit 200 ist dazu ausgebildet, die ermittelte, vorgegebene Übersetzung dem Aktuator 210 zu übermitteln. Der Aktuator 210 wiederum ist dazu ausgebildet, die übermittelte, vorgegebene Übersetzung an der Lenkstange einzustellen. Der Aktuator kann hierbei beispielsweise als CVT-Getriebe ausgebildet sein, welches dazu ausgebildet ist zwei zueinander verschiebbare Komponenten der Lenkstange stufenlos einzustellen.

Optional weist die Vorrichtung zusätzlich einen ersten Sensor 220 auf, welcher dazu ausgebildet ist, eine erste Drehrate eines Hinterrads des Fahrrads zu erfassen. Zusätzlich weist die Vorrichtung in diesem Zusammenhang optional einen zweiten Sensor 230 auf, welcher dazu ausgebildet ist, eine zweite Drehrate des Vorderrads des Fahrrads zu erfassen. Die Recheneinheit 200 ist hierbei dazu ausgebildet, die erste erfasste Drehrate mit der zweiten erfassten Drehrate zu vergleichen und ein Abheben des Hinterrads in Abhängigkeit des Vergleichs der erfassten ersten Drehrate mit der erfassten zweiten Drehrate zu erkennen. Alternativ oder zusätzlich weist die Vorrichtung in diesem Zusammenhang einen fünften Sensor 270 auf, welcher dazu ausgebildet ist, die Beschleunigung des Fahrrads in z-Richtung, das heißt nach oben, beispielsweise im Schwerpunkt des Fahrrads, zu erfassen. Die Recheneinheit 200 ist in diesem Zusammenhang dazu ausgebildet, ein Abheben des Hinterrads abhängig von der erfassten Beschleunigung zu ermitteln.

Optional weist die Vorrichtung einen dritten Sensor 240 auf, welcher dazu ausgebildet ist, den Lenkerwinkel, welcher momentan mittels des Lenkers erzeugt wird, zu erfassen. Die Recheneinheit 200 ist in diesem Zusammenhang dazu ausgebildet, die vorgegebene Übersetzung zwischen Lenkerwinkel und Einschlagwinkel des Vorderrads bei daraufhin erfasster Vergrößerung des momentanen Lenkerwinkels zu verändern. Die Recheneinheit 200 kann beispielsweise die Übersetzung linear oder nichtlinear verändern.

Optional weist die Vorrichtung einen vierten Sensor 250 auf, welcher dazu ausgebildet ist, eine Geschwindigkeit des Fahrrads zu erfassen. Die Recheneinheit 200 ist in diesem Zusammenhang dazu ausgebildet, die vorgegebene Übersetzung in Abhängigkeit der erfassten Geschwindigkeit zu ermitteln.

Optional weist die Vorrichtung eine Signalerzeugungseinheit 260 auf. Diese Signalerzeugungseinheit 260 ist dazu ausgebildet, die vorgegebene Übersetzung in Abhängigkeit von dem erzeugten Signal zu verändern. Das erzeugte Signal kann auf einen Fahrerwunsch zur Veränderung der vorgegebenen Übersetzung hindeuten.

Figur 3 zeigt in der Draufsicht einen Fahrradlenker 180 mit Handgriffen 185a und 185b, wobei der Lenker 180 um einen Lenkerwinkel β gegenüber einer möglichen Geradeausfahrt 190 eingeschlagen ist. Der aus dem Lenkerwinkel β entstehende Einschlagwinkel α eines hier nicht dargestellten Vorderrads entspricht hierbei jedoch nicht dem Lenkerwinkel β. Grund hierfür ist eine Übersetzung zwischen Lenkerwinkel β und Einschlagwinkel α des Vorderrads mit einem Wert kleiner 1, welche mittels des Aktuators 160 an der hier nicht dargestellten Lenkstange eingestellt ist. Der Einschlagwinkel α des Vorderrads ist somit um die Differenz α subtrahiert von β kleiner als der Lenkerwinkel β.

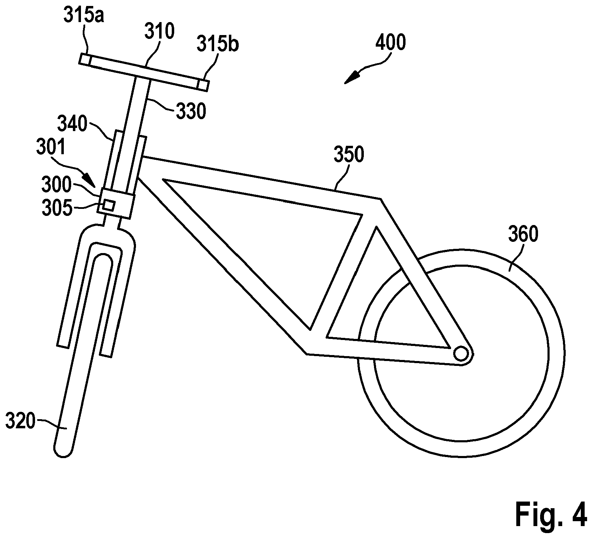

Figur 4 zeigt schematisch ein Fahrrad 400 mit einer Vorrichtung, wie zuvor in Figur 2 beschrieben.

Der Aktuator 300 der Vorrichtung 301 ist hierbei an einer Lenkstange 330 angeordnet, welche drehbar innerhalb eines Steuerrohrs 340 des Fahrrads angeordnet ist. Die Recheneinheit 305 ist in dieser Figur 4 in dem Aktuator 300 integriert. Es wäre jedoch auch beispielsweise vorstellbar, dass die Recheneinheit 305 separat an dem Fahrrad 400 angeordnet ist oder Bestandteil eines in dieser Figur nicht dargestellten ersten, zweiten, dritten, vierten oder fünften Sensors ist.

Das Fahrrad weist weiterhin einen Lenker 310 mit Handgriffen 315a und 315b auf mittels dem ein Lenkerwinkel erzeugt werden kann. Das lenkbare Vorderrad 320 vollzieht abhängig von der mittels des Aktuators 300 eingestellten Übersetzung zwischen Lenkerwinkel und Einschlagwinkel des Vorderrads 320 eine Drehung um den somit erzeugten Einschlagwinkel. Außerdem weist das Fahrrad 400 einen Rahmen 350 und ein an dem Rahmen 350 angeordnetes Hinterrad 360 auf.

Bei dem Fahrrad kann es sich beispielsweise um ein elektrisch betriebenes Fahrrad handeln.

## Patentansprüche

1. Verfahren zur Einstellung einer vorgegebenen Übersetzung zwischen Lenkerwinkel und Einschlagwinkel eines Vorderrads (320) eines Fahrrads (400), wobei das Verfahren die folgenden Verfahrensschritte aufweist:
- Erkennen (40) eines Abhebens eines Hinterrads (360) des Fahrrads (400), und
- Einstellung (90) der vorgegebenen Übersetzung zwischen Lenkerwinkel (β) und Einschlagwinkel (α) des Vorderrads (320) abhängig von dem ermittelten Abheben des Hinterrads (360) mittels eines an einer Lenkstange (330) des Fahrrads (400) angeordneten Aktuators (210, 300).

2. Verfahren nach Anspruch 1, **dadurch gekennzeichnet, dass** das Verfahren die folgenden Verfahrensschritte aufweist:
- Erfassung (60) einer Geschwindigkeit des Fahrrads (400), und
- Einstellung (90) der vorgegebenen Übersetzung zwischen Lenkerwinkel (β) und Einschlagwinkel (α) des Vorderrads (320) zusätzlich in Abhängigkeit der erfassten Geschwindigkeit des Fahrrads (400).

3. Verfahren nach einem der Ansprüche 1 oder 2, wobei beim Erkennen (40) des Abhebens des Hinterrads (360) des Fahrrads (400), die vorgegebene Übersetzung zwischen Lenkerwinkel (β) und Einschlagwinkel (α) des Vorderrads (320) auf einen Wert kleiner 1 eingestellt wird.

4. Verfahren nach einem der Ansprüche 1 bis 3, **dadurch gekennzeichnet, dass** die vorgegebene Übersetzung zwischen Lenkerwinkel (β) und Einschlagwinkel (α) des Vorderrads (320) bei Vergrößerung des Lenkerwinkels (β) linear verändert, insbesondere linear verringert wird.

5. Verfahren nach einem der Ansprüche 1 bis 3, **dadurch gekennzeichnet, dass** die vorgegebene Übersetzung zwischen Lenkerwinkel (β) und Einschlagwinkel (α) des Vorderrads (320) bei Vergrößerung des Lenkerwinkels (β) nichtlinear verändert, insbesondere degressiv oder progressiv verringert wird.

6. Verfahren nach einem der Ansprüche 1 bis 5, **dadurch gekennzeichnet, dass** die vorgegebene Übersetzung abhängig von einem Fahrerwunsch veränderbar (140) ist.

7. Verfahren nach einem der Ansprüche 1 bis 6, **dadurch gekennzeichnet, dass** das Verfahren die folgenden zusätzlichen Verfahrensschritte aufweist:
- Erfassung (10) einer ersten Drehrate des Hinterrads (360), und
- Erkennen (40) des Abhebens des Hinterrads (360) des Fahrrads (400) in Abhängigkeit der erfassten ersten Drehrate.

8. Verfahren nach Anspruch 7, **dadurch gekennzeichnet, dass** das Verfahren die folgenden zusätzlichen Verfahrensschritte aufweist:
- Erfassung (20) einer zweiten Drehrate des Vorderrads (320) des Fahrrads, und
- Vergleichen der erfassten ersten Drehrate mit der erfassten zweiten Drehrate, und
- Erkennen (40) des Abhebens des Hinterrads (360) des Fahrrads (400) in Abhängigkeit des Vergleichs der ersten Drehrate mit der zweiten Drehrate.

9. Vorrichtung (301) zur Ausführung eines Verfahrens nach einem der Ansprüche 1 bis 8, wobei die Vorrichtung eine Recheneinheit (200, 305) aufweist, dazu ausgebildet ein Abheben eines Hinterrads (360) eines Fahrrads (400) zu erkennen,
**dadurch gekennzeichnet, dass** die Vorrichtung einen an einer Lenkstange (330) des Fahrrads (400) angeordneten Aktuator (210, 305) aufweist,
wobei die Recheneinheit (200, 305) dazu ausgebildet ist, in Abhängigkeit des erkannten Abhebens des Hinterrads (360) eine vorgegebene Übersetzung zwischen Lenkerwinkel (β) und Einschlagwinkel (α) eines Vorderrads (320) zu ermitteln, und die vorgegebene Übersetzung dem Aktuator (210, 300) zu übermitteln, wobei der Aktuator (210, 300) dazu ausgebildet ist, die vorgegebene Übersetzung an der Lenkstange (330) einzustellen.

10. Vorrichtung (301) nach Anspruch 9, **dadurch gekennzeichnet, dass** die Vorrichtung (301) zusätzlich aufweist
- einen ersten Sensor (220), dazu ausgebildet, eine erste Drehrate des Hinterrads (360) des Fahrrads (400) zu erfassen, und
- einen zweiten Sensor (230), dazu ausgebildet, eine zweite Drehrate des Vorderrads (320) des Fahrrads (400) zu erfassen,
wobei die Recheneinheit (200, 305) dazu ausgebildet ist, die erfasste erste Drehrate mit der erfassten zweiten Drehrate zu vergleichen und das Abheben des Hinterrads (360) in Abhängigkeit des Vergleichs der ersten Drehrate mit der erfassten zweiten Drehrate zu erkennen.

11. Vorrichtung (301) nach einem der Ansprüche 10 oder 11, **dadurch gekennzeichnet, dass** die Vorrichtung (301) zusätzlich aufweist
- einen dritten Sensor (240), dazu ausgebildet, den Lenkerwinkel (β) zu erfassen,
wobei die Recheneinheit (200, 305) dazu ausgebildet ist, die vorgegebene Übersetzung zwischen Lenkerwinkel (β) und Einschlagwinkel (α) des Vorderrads (320) bei Vergrößerung des Lenkerwinkels (β), insbesondere linear oder nichtlinear, zu verändern.

12. Vorrichtung (301) nach einem der Ansprüche 9 bis 11, **dadurch gekennzeichnet, dass** die Vorrichtung (301) zusätzlich aufweist
- einen vierten Sensor (250), ausgebildet zur Erfassung einer Geschwindigkeit des Fahrrads (400),
wobei die Recheneinheit (200, 305) zusätzlich dazu ausgebildet ist, die vorgegebene Übersetzung in Abhängigkeit der erfassten Geschwindigkeit zu ermitteln.

13. Vorrichtung (301) nach einem der Ansprüche 9 bis 12, **dadurch gekennzeichnet, dass** der Aktuator (210, 305) ein CVT-Getriebe repräsentiert, welches dazu ausgebildet ist eine Übersetzung zwischen zwei zueinander verschiebbaren Komponenten der Lenkstange (330) stufenlos einzustellen.

14. Vorrichtung (301) nach einem der Ansprüche 9 bis 13, **dadurch gekennzeichnet, dass** die Vorrichtung (301) zusätzlich aufweist,
- eine Signalerzeugungseinheit (260), dazu ausgebildet ein Signal des Fahrradfahrers zu erzeugen,
wobei die Recheneinheit (200, 305) dazu ausgebildet ist, die vorgegebene Übersetzung in Abhängigkeit von dem erzeugten Signal zu verändern.

15. Fahrrad (400), insbesondere elektrisch betriebenes Fahrrad, mit einer Vorrichtung (301) nach einem der Ansprüche 9 bis 14.

## Claims

1. Method for adjusting a predetermined ratio between handlebar angle and steering angle of a front wheel (320) of a bicycle (400), wherein the method has the following method steps:
- detecting (40) a lift-off of a rear wheel (360) of the bicycle (400), and
- adjusting (90) the predefined ratio between handlebar angle (β) and steering angle (α) of the front wheel (320) in a manner dependent on the determined lift-off of the rear wheel (360), by means of an actuator (210, 300) arranged on a handlebar (330) of the bicycle (400).

2. Method according to Claim 1, **characterized in that** the method has the following method steps:
- measuring (60) a speed of the bicycle (400), and
- adjusting (90) the predefined ratio between handlebar angle (β) and steering angle (α) of the front wheel (320) additionally in a manner dependent on the measured speed of the bicycle (400).

3. Method according to Claim 1 or 2, **characterized in that**, upon the detection (30) of the lift-off of the rear wheel (360) of the bicycle (400), the predefined ratio between handlebar angle (β) and steering angle (α) of the front wheel (320) is adjusted to a value less than 1.

4. Method according to one of Claims 1 to 3, **characterized in that** the predefined ratio between handlebar angle (β) and steering angle (α) of the front wheel (320) is changed linearly, in particular reduced linearly, when the handlebar angle (β) is increased.

5. Method according to one of Claims 1 to 3, **characterized in that** the predefined ratio between handlebar angle (β) and steering angle (α) of the front wheel (320) is changed non-linearly, in particular reduced degressively or progressively, when the handlebar angle (β) is increased.

6. Method according to one of Claims 1 to 5, **characterized in that** the predefined ratio can be varied (140) in a manner dependent on a rider demand.

7. Method according to one of Claims 1 to 6, **characterized in that** the method has the following additional method steps:
- measuring (10) a first rate of rotation of the rear wheel (360), and
- detecting (40) the lift-off of the rear wheel (360) of the bicycle (400) in a manner dependent on the measured first rate of rotation.

8. Method according to Claim 7, **characterized in that** the method has the following additional method steps:
- measuring (20) a second rate of rotation of the front wheel (320) of the bicycle,
- comparing the measured first rate of rotation with the measured second rate of rotation, and
- detecting (40) the lift-off of the rear wheel (360) of the bicycle (400) in a manner dependent on the comparison of the first rate of rotation with the second rate of rotation.

9. Device (301) for carrying out a method according to one of Claims 1 to 8, wherein the device has a computing unit (200, 305), designed to detect a lift-off of a rear wheel (360) of a bicycle (400), **characterized in that** the device has an actuator (210, 305) arranged on a handlebar (330) of the bicycle (400), wherein the computing unit (200, 305) is designed to determine a predefined ratio between handlebar angle (β) and steering angle (α) of a front wheel (320) in a manner dependent on the detected lift-off of the rear wheel (360), and to transmit the predefined ratio to the actuator (210, 300), wherein the actuator (210, 300) is designed to adjust the predefined ratio on the handlebar (330).

10. Device (301) according to Claim 9, **characterized in that** the device (301) additionally has
- a first sensor (220), designed to measure a first rate of rotation of the rear wheel (360) of the bicycle (400), and
- a second sensor (230), designed to measure a second rate of rotation of the front wheel (320) of the bicycle (400),
wherein the computing unit (200, 305) is additionally designed to compare the measured first rate of rotation with the measured second rate of rotation and to detect the lift-off of the rear wheel (360) in a manner dependent on the comparison of the first rate of rotation with the measured second rate of rotation.

11. Device (301) according to either of Claims 10 and 11, **characterized in that** the device (301) additionally has
- a third sensor (240), designed to measure the handlebar angle (β),
wherein the computing unit (200, 305) is designed to vary the predefined ratio between handlebar angle (β) and steering angle (α) of the front wheel (320), in particular linearly or nonlinearly, when the handlebar angle (β) is increased.

12. Device (301) according to one of Claims 9 to 11, **characterized in that** the device (301) additionally has
- a fourth sensor (250), designed to measure a speed of the bicycle (400),
wherein the computing unit (200, 305) is additionally designed to determine the predefined ratio in a manner dependent on the measured speed.

13. Device (301) according to one of Claims 9 to 12, **characterized in that** the actuator (210, 305) represents a CVT transmission, which is designed to adjust a ratio between two mutually displaceable components of the handlebar (330) in continuous fashion.

14. Device (301) according to one of Claims 9 to 13, **characterized in that** the device (301) additionally has
- a signal generating unit (260), designed to generate a signal of the bicycle rider,
wherein the computing unit (200, 305) is designed to vary the predefined ratio in a manner dependent on the generated signal.

15. Bicycle (400), in particular electrically operated bicycle, having a device (301) according to one of Claims 9 to 14.

## Revendications

1. Procédé de réglage d'un rapport de transmission prédéfini entre un angle de guidon et un angle de braquage d'une roue avant (320) d'une bicyclette (400), le procédé comprenant les étapes de procédé suivantes consistant à :
- reconnaître (40) un soulèvement d'une roue arrière (360) de la bicyclette (400), et
- régler (90) le rapport de transmission prédéfini entre l'angle de guidon (β) et l'angle de braquage (α) de la roue avant (320) en fonction du soulèvement déterminé de la roue arrière (360) au moyen d'un actionneur (210, 300) disposé sur la barre de direction (330) de la bicyclette (400).

2. Procédé selon la revendication 1, **caractérisé en ce que** le procédé comprend les étapes de procédé suivantes :
- détecter (60) une vitesse de la bicyclette (400), et
- régler (90) le rapport de transmission prédéfini entre l'angle de guidon (β) et l'angle de braquage (α) de la roue avant (320) de plus en fonction de la vitesse détectée de la bicyclette (400) .

3. Procédé selon l'une quelconque des revendications 1 et 2, dans lequel, lorsque le soulèvement de la roue arrière (360) de la bicyclette (400) est reconnu (40), le rapport de transmission prédéfini entre l'angle de guidon (β) et l'angle de braquage (α) de la roue avant (320) est réglé sur une valeur inférieure à 1.

4. Procédé selon l'une quelconque des revendications 1 à 3, **caractérisé en ce que** le rapport de transmission prédéfini entre l'angle de guidon (β) et l'angle de braquage (α) de la roue avant (320) est modifié de manière linéaire, en particulier diminué de manière linéaire, en cas d'augmentation de l'angle de guidon (β).

5. Procédé selon l'une quelconque des revendications 1 à 3, **caractérisé en ce que** le rapport de transmission prédéfini entre l'angle de guidon (β) et l'angle de braquage (α) de la roue avant (320) est modifié de manière non linéaire, en particulier diminué de manière dégressive ou progressive, en cas d'augmentation de l'angle de guidon (β).

6. Procédé selon l'une quelconque des revendications 1 à 5, **caractérisé en ce que** le rapport de transmission prédéfini peut être varié en fonction d'un souhait du cycliste (140).

7. Procédé selon l'une quelconque des revendications 1 à 6, **caractérisé en ce que** le procédé comprend les étapes de procédé supplémentaires consistant à :
- détecter (10) une première vitesse de rotation de la roue arrière (360), et
- reconnaître (40) le soulèvement de la roue arrière (360) de la bicyclette (400) en fonction de la première vitesse de rotation détectée.

8. Procédé selon la revendication 7, **caractérisé en ce que** le procédé comprend les étapes de procédé supplémentaires suivantes consistant à :
- détecter (20) une deuxième vitesse de rotation de la roue avant (320) de la bicyclette, et
- comparer la première vitesse de rotation détectée à la deuxième vitesse de rotation détectée, et
- reconnaître (40) le soulèvement de la roue arrière (360) de la bicyclette (400) en fonction de la comparaison de la première vitesse de rotation avec la deuxième vitesse de rotation.

9. Dispositif (301) permettant d'effectuer un procédé selon l'une quelconque des revendications 1 à 8, le dispositif comprenant une unité de calcul (200, 305) qui est réalisée pour reconnaître un soulèvement d'une roue arrière (360) d'une bicyclette (400),
**caractérisé en ce que** le dispositif comprend un actionneur (210, 305) disposé sur une barre de direction (330) de la bicyclette (400),
l'unité de calcul (200, 305) étant réalisée pour déterminer un rapport de transmission prédéfini entre l'angle de guidon (β) et l'angle de braquage (α) d'une roue avant (320) en fonction du soulèvement reconnu de la roue arrière (360), et pour transmettre le rapport de transmission prédéfini à l'actionneur (210, 300), l'actionneur (210, 300) étant réalisé pour régler le rapport de transmission prédéfini au niveau de la barre de direction (330).

10. Dispositif (301) selon la revendication 9, **caractérisé en ce que** le dispositif (301) comprend en outre :
- un premier capteur (220) qui est réalisé pour détecter une première vitesse de rotation de la roue arrière (360) de la bicyclette (400), et
- un deuxième capteur (230) qui est réalisé pour détecter une deuxième vitesse de rotation de la roue avant (320) de la bicyclette (400),
l'unité de calcul (200, 305) étant réalisée pour comparer la première vitesse de rotation détectée à la deuxième vitesse de rotation détectée et pour reconnaître le soulèvement de la roue arrière (360) en fonction de la comparaison de la première vitesse de rotation avec la deuxième vitesse de rotation détectée.

11. Dispositif (301) selon l'une quelconque des revendications 10 et 11, **caractérisé en ce que** le dispositif (301) comprend en outre :
- un troisième capteur (240) qui est réalisé pour détecter l'angle de guidon (β),
l'unité de calcul (200, 305) étant réalisée pour modifier, en particulier de manière linéaire ou non linéaire, le rapport de transmission prédéfini entre l'angle de guidon (β) et l'angle de braquage (α) de la roue avant (320) en cas d'augmentation de l'angle de guidon (β).

12. Dispositif (301) selon l'une quelconque des revendications 9 à 11, **caractérisé en ce que** le dispositif (301) comprend en outre :
- un quatrième capteur (250) qui est réalisé pour détecter une vitesse de la bicyclette (400), l'unité de calcul (200, 305) étant en outre réalisée pour déterminer le rapport de transmission prédéfini en fonction de la vitesse détectée.

13. Dispositif (301) selon l'une quelconque des revendications 9 à 12, **caractérisé en ce que** l'actionneur (210, 305) représente une transmission CVT qui est réalisée pour régler en continu un rapport de transmission entre deux composants de la barre de direction (330), mobiles l'un par rapport à l'autre.

14. Dispositif (301) selon l'une quelconque des revendications 9 à 13, **caractérisé en ce que** le dispositif (301) comprend en outre :
- une unité de génération de signal (260) qui est réalisée pour générer un signal du cycliste, l'unité de calcul (200, 305) étant réalisée pour modifier le rapport de transmission prédéfini en fonction du signal généré.

15. Bicyclette (400), en particulier bicyclette à commande électrique, comprenant un dispositif (301) selon l'une quelconque des revendications 9 à 14.
